# EUROPÄISCHE PATENTSCHRIFT

(11) **EP 3 043 912 B1**
(45) Veröffentlichungstag und Bekanntmachung des Hinweises auf die Patenterteilung: **04.12.2019**
(21) Anmeldenummer: 14759223.2
(22) Anmeldetag: 08.09.2014
(51) Int. Cl.: B01L 9/00, G01N 35/10, B01L 3/02

(54) **DISPENSER FÜR FLÜSSIGE SUBSTANZEN**
DISPENSER FOR LIQUID SUBSTANCES
DISTRIBUTEUR DE SUBSTANCES LIQUIDES

(30) Priorität: 13.09.2013 CH 15732013
(43) Veröffentlichungstag der Anmeldung: 20.07.2016
(73) Patentinhaber: Gyger Invest AG, 3645 Gwatt/Thun (CH)
(72) Erfinder: MERZENICH, Bernd, 53859 Niederkassel (DE); GYGER, Fritz, CH-3645 Gwatt (CH)
(74) Vertreter: Rentsch Partner AG
(86) Internationale Anmeldenummer: PCT/EP2014/069051
(87) Internationale Veröffentlichungsnummer: WO 2015/036355

(56) Entgegenhaltungen:
- WO-A1-2010/008387
- WO-A1-2010/008387
- WO-A1-2010/008387
- DE-A1-102008 010 267
- DE-A1-102008 010 267
- US-A1- 2007 272 710
- US-A1- 2007 272 710
- US-A1- 2007 272 710
- US-A1- 2009 301 231
- US-A1- 2009 301 231
- US-A1- 2009 301 231
- US-A1- 2011 042 605
- US-A1- 2011 042 605
- US-A1- 2011 042 605
- US-A1- 2011 296 931
- US-A1- 2011 296 931
- US-B1- 6 524 531
- US-B1- 6 524 531
- US-B1- 6 524 531

## Beschreibung

### Technisches Gebiet

Die vorliegende Offenbarung betrifft Dispenser zum Dispensieren flüssiger Substanzen, Führungseinrichtungen für derartige Dispenser, Dispensersystem mit derartigen Dispensern, sowie Verfahren zum Dispensieren von flüssigen Substanzen.

### Hintergrund; Zusammenfassung der Offenbarung

Für zahlreiche medizinische, pharmakologische, zellbiologische, molekularbiologische oder genetische Analyseverfahren wird zunehmend eine einfache, kostengünstige und ohne großen apparativen Aufwand anwendbare Dispensiermöglichkeit im Dosierbereich zwischen ca. 500 pl (Picoliter) und 2 ml (Milliliter) benötigt, wobei besonders der Dosierbereich zwischen ca. 1 nl (Nanoliter) und ca. 1 µl (Mikroliter) relevant ist, in dem bisher keine präzise manuelle oder manuell geführte elektrische (= so genannte "elektronische") Pipettier- bzw. Dispensiertechnik zur Verfügung steht. Manuelle oder so genannte "elektronische" Pipetten oder Dispenser arbeiten nach dem Prinzip der Luftverdrängung, die entweder mit einer manuellen oder einer durch elektrische Mikromotoren angetriebenen Pumpe erzeugt wird. Die DE102008010267A1 gehört zum Stand der Technik. Mit einer derartigen Technik ist zum aktuellen Stand der Technik eine präzise replizierbare Dosiermenge von weniger als 0.5 µl (Mikroliter) und eine präzise replizierbare Auflösung von weniger als 0.1 µl im Dosierbereich von 0.5 µl aufwärts nicht realisierbar.

Neben den üblichen Funktionen einer manuellen Pipette, dem Aufnehmen (= Aspirieren) und Abgeben bzw. Dosieren (= Dispensieren) von flüssigen Substanzen, wird zunehmend auch das ausschliessliche manuelle Dispensieren aus einem Reservoir - insbesondere im Bereich von Kleinst-Dosiermengen im Nano- und Mikroliterbereich - relevant und nachgefragt.

Darüber hinaus besteht eine wachsende Nachfrage nach einfach zu handhabenden, präzisen und kostengünstigen manuellen Dispensiergeräten, mit denen im Verlauf der Vorbereitung und Durchführung der praktischen experimentellen Arbeit quasi als Bestandteil des Arbeitsflusses "automatisch" auch die Erfassung bzw. Protokollierung, Dokumentierung und Verwertbarkeit der entsprechenden Parameter und Daten für die weitere wissenschaftliche Auswertung mitgeliefert wird und mit denen sich mittels integrierter Softwareunterstützung auch hoch komplexe Dispensieraufgaben (z.B. bei der Untersuchung der Wechselwirkungen mehrerer Substanzen) mittels vergleichsweise einfacher manueller Tätigkeiten bewerkstelligen lassen.

Schliesslich nimmt in jüngster Vergangenheit insbesondere auf dem Gebiet der Zell- und Molekularbiologie sowie Pharmakologie die Komplexität von Untersuchungen, Assays und Verfahrensentwicklungen erheblich zu, in denen kleinteilige manuelle Dispensierarbeiten erforderlich werden. Nicht zuletzt aus Kostengründen werden immer häufiger 96er und 384er Wellplatten mit 96 bzw. 384 Wells als individuellen Dispensierzielen verwendet. Dies führt dazu, dass in Bezug auf die physische bzw. ergonomische Machbarkeit und eine erforderliche Fehlerfreiheit das rein manuelle Dispensieren zunehmend an seine Grenzen stösst.

Es ist Aufgabe der vorliegenden Erfindung, die diesbezügliche Situation durch Bereitstellung neuartiger Dispenser, Dispensersysteme und Dispensierverfahren zu verbessern. Die Lösung dieser Aufgaben erfolgt durch Vorrichtungen und Verfahren entsprechend der unabhängigen Ansprüche, wobei die zugehörigen abhängigen Ansprüche exemplarische Ausführungsformen mit vorteilhaften Eigenschaften festlegen.

Ein Dispenser entsprechend der vorliegenden Offenbarung zum Dispensieren flüssiger Substanzen, insbesondere mit Volumina im Nanoliterbereich oder Mikroliterbereich, kann umfassen:
a) ein im Wesentlichen stabförmiges Gehäuse, das dazu ausgebildet ist, zur Anwendung von einem Benutzer in einer Hand gehalten zu werden;
b) einen Reservoirkonnektor zum fluidischen Anschluss eines die zu dispensierende Substanz enthaltenden Reservoirs;
c) ein Auslöselement zur manuellen Auslösung eines Dispensierkommandos;
d) ein elektrisch betätigtes Dispenserventil (150) mit einem geöffneten und einem geschlossenen Zustand, wobei das Dispenserventil (150) einen mit dem Reservoirkonnektor (130) fluidisch gekoppelten Einlass sowie einen Auslass besitzt, wobei das Dispenserventil (150) dazu ausgelegt ist, im geöffneten Zustand zu dispensierende Flüssigkeit vom der Einlass zum Auslass zu leiten;
e) eine mit dem Auslass des Dispenserventils (150) fluidisch gekoppelte oder Teil des Dispenserventils (150) bildende Ventilspitze (152), die dazu ausgelegt ist, im geöffneten Zustand des Dispenserventils (150) Flüssigkeit aus dem Dispenser (100, 100', 100") zu dispensieren.

Ein Dispenser gemäss der vorliegenden Offenbarung ist in erster Linie dazu ausgelegt, dass die Ventilspitze sich beim Dispensieren in einem gewissen Abstand über dem Dispensierziel, beispielsweise ein Well, befindet, und nicht in etwaige bereits dort befindliche Flüssigkeit eintaucht. Das Dispensieren erfolgt in Tropfen oder Strahl.

In einer exemplarischen Ausführungsform ist das Dispenserventil als passiv schliessendes Kugelventil mit einem aus mineralischem Material gefertigten Ventilsitz und aus mineralischem Material gefertigter Ventilkugel ausgelegt. Mit einer derartigen Konstruktion sind Dosiervolumina im Bereich von Mikrolitern oder auch Nanolitern möglich. Der Ventilsitz kann dabei beispielsweise aus Saphir und die Ventilkugel aus Rubin gefertigt sein. Das Dispenserventil wird elektromagnetisch mittels einer Ventilspule betätigt und von der zu dispensierenden Flüssigkeit direkt durchströmt. Im stromlosen Zustand ist das Dispenserventil durch ein elastisches Element, beispielsweise eine Schliessfeder, passiv geschlossen. Die Schliessfeder wirkt auf einen mobilen Anker mit der Ventilkugel. Bei jeder Betätigung, die Bestromung der Ventilspule erfolgt, wird der mobile Anker mit der Ventilkugel vom Magnetfeld eines stationären Ankers magnetisch angezogen, das Dispenserventil öffnet und leitet unter Druck stehende Flüssigkeit vom Einlass zum Auslass.

Eine detailierte Beschreibung geeigneter Dispenserventile findet sich in der WO 2008/083509, welche bezüglich des Ventilaufbaus hiermit in die vorliegende Offenbarung durch Verweis einbezogen wird. Ein geeignetes Dispenserventil kann z. B. ein Mikroventil der Reihe SMLD 300 G der Fritz Gyger AG, Gwatt (Thun), Schweiz, sein.

In einer Ausführungsform ist das Dispenserventil für minimale Dispensiervolumen im Bereich von 10 Nanolitern bis 200 Nanolitern ausgelegt. Das Dispenserventil kann aber je nach Anforderungen auch für andere minimale Dispensiervolumina ausgelegt werden.

In einer exemplarischen Ausführungsform sind die in der Anwendung mit der zu dispensierenden Substanz in Kontakt kommenden Elemente, insbesondere das Dispenserventil, zerstörungsfrei entnehmbar und wieder montierbar.

In einer exemplarischen Ausführungsform umfasst der Dispenser eine Anzahl von Dispenserventilen und eine entsprechende Anzahl von Ventilspitzen. Eine solche Ausführungsform ermöglicht das parallel Dispensieren in mehrere Dispensierziele, z. B. in mehrere nebeneinander angeordnete Wells einer Wellplatte oder Mikrotitrierplatte.

Weitere exemplarische und vorteilhafte Ausgestaltungen eines offenbarungsgemässen Dispensers ergeben sich aus den Ausführungsbeispielen, wobei die hier und in den Ausführungsbeispielen offenbarten besonderen Merkmale jeweils einzeln oder in einer Kombination realisiert sein können.

Die vorliegende Offenbarung betrifft ferner eine Dispenser-Reservoir-Kombination, umfassend einen Dispenser entsprechend der vorliegenden Offenbarung sowie ein zur Aufnahme der zu dispensierenden Substanz ausgelegtes Reservoir, wobei das Reservoir einen Anschluss zur Beaufschlagung der aufgenommenen Substanz mit Druckluft umfasst. Die Druckluft stellt dabei den für die Flüssigkeitsförderung erforderlichen Arbeitsdruck bereit.

Das Reservoir kann derart ausgestaltet sein, dass die enthaltene Flüssigkeit oder Substanz unmittelbar mit der Luft in Kontakt kommt. Es kann im Reservoirkorpus jedoch auch ein dichtend und verschiebbar aufgenommener Kolben, Stopfen oder ähnliches zur Trennung vorhanden sein. Statt Druckluft ist auch die Verwendung eines anderen gespannten Gases in grundsätzlich gleicher Weise möglich.

Die vorliegende Offenbarung betrifft ferner eine Führungseinrichtung für einen Dispenser, insbesondere für einen Dispenser gemäss der vorliegenden Offenbarung. Eine offenbarungsgemässe Führungseinrichtung kann umfassen:
a) eine handbetätigte Kinematik mit einer Dispenseraufnahme;
b) einen Dispensierzielhalter zur bezüglich der Kinematik im Wesentlichen ortsfesten und spielfreien Lagerung mehrerer nebeneinander angeordneter Dispensierziele, wobei die Kinematik dazu ausgelegt sein kann, den Dispenser und insbesondere eine Ventilspitze des Dispensers in einem Abstand über dem Dispensierzielhalter zu halten;
c) ein Positionssensorsystem zur elektronischen Erfassung einer Ist- Position des Dispensers und insbesondere einer Ventilspitze des Dispensers in einer Ebene oberhalb des Dispensierzielhalters.

Der Begriff "handbetätigt" bedeutet in diesem Zusammenhang, dass die Bewegung nicht durch oder mit Unterstützung von Aktuatoren, wie beispielsweise Motoren, erfolgt, sondern manuell durch den Benutzer, welcher die zur Bewegung erforderliche Kraft aufbringt.

In einer exemplarischen Ausführungsform der Führungsseinrichtung umfasst die handbetätigte Kinematik eine handbetätigte kartesische X-Y-Kinematik mit einer X-Achse und einer Y-Achse und das Positionssensorsystem umfasst je ein lineares Wegmesssystem für die X-Achse und die Y-Achse.

In einer exemplarischen Ausführungsform ist die Dispensierziehlaufnahme als Wellplattenhalter oder Mikrotitrierplatte mit einer Anzahl von z. B. 96 oder 384 Wells ausgebildet, wobei die Wells Dispensierziele bilden. Alternativ könnte die Dispensierzielaufnahme aber beispielsweise auch ein Halter für Reagenzgläser sein.

In einer exemplarischen Ausführungsform weisst die Führungseinrichtung eine Rastvorrichtung auf, welche einrastet, wenn sich der Dispenser, und einsbesondere eine Ventilspitze des Dispensers, über einem Dispensierziel befindet.

In einer exemplarischen Ausführungsform einer solchen Führungseinrichtung weisst die Rastvorrichtung einen Führungsstift und eine Führungsplatte auf, wobei die Führungsplatte eine Anzahl von konkaven Elementen aufweist, deren geometrische Anordnung auf der Führungsplatte der geometrischen Anordnung der Dispensierziele entspricht, und wobei der der Führungsstift dazu ausgelegt ist, bei Positionierung über einem konkaven Element in dieses einzurasten und im eingerasteten Zustand eine Bewegung der Kinematik zu lösbar zu blockieren oder zu erschweren. Die konkaven Elemente, beispielsweise Vertiefungen oder Sacklöcher, können ferner durch Rillen verbunden sein, wodurch das Anfahren der Dispensierziele, also beispielsweise Wells, vereinfacht wird.

Weitere exemplarische und vorteilhafte Ausgestaltungen eines offenbarungsgemässen Führungseinrichtung ergeben sich aus den Ausführungsbeispielen, wobei die hier und in den Ausführungsbeispielen offenbarten besonderen Merkmale jeweils einzeln oder in einer Kombination realisiert sein können.

In einer weiteren exemplarischen Ausführungsform der Führungseinrichtung umfasst die Führungseinrichtung ferner einen mit der handbetätigten Kinematik operativ gekoppelten elektrischen Antrieb zum Bewegen bzw. Verfahren der Dispenseraufnahme. Mit einer derartig ausgestalteten Führungseinrichtung können die Dispenseraufnahme bzw. ein in der Dispenseraufnahme aufgenommener Dispenser sowohl manuell auch mittels des elektrischen Antriebs bewegt bzw. verfahren werden. Wie weiter unten näher erläutert, erlaubt eine derartige Ausführungsform eine flexible Teilautomatisierung wiederholt durchzuführender Dispensiervorgänge.

Die vorliegende Offenbarung betrifft ferner ein Dispensersystem, umfassend einen Dispenser entsprechend der vorliegenden Offenbarung sowie eine Führungseinrichtung entsprechend der vorliegenden Offenbarung.

Im Zusammenhang mit einer offenbarungsgemässen Führungseinrichtung ist die Verwendung eines offenbarungsgemässen Dispensers vorteilhaft, aber nicht zwingend. Es könnte ebenso ein anderer Dispenser eingesetzt werden. Ferner kann der Dispenser und die Führungseinrichtung auch ganz oder teilweise integral realisiert werden. Die Anmelderin behält sich ausdrücklich vor, für eine offenbarungsgemässe Führungseinrichtung separat Schutz zu beanspruchen.

Ein derartiges Dispensersystem mit einem z. B. grundsätzlich handgehaltenen Dispenser und einer Führungseinrichtung stellt bezüglich des apparativen Aufwands einen Zwischenschritt zwischen einem einfachen handgehaltenen Dispenser und einem Dispensierautomaten oder Dispensier-Roboter mit programmgesteuerter und aktuatorbetriebener Kinematik dar. Insbesondere sind die Investitionskosten gegenüber einem entsprechenden Automaten oder Roboter deutlich geringer. Auch der Programmieraufwand für ein weiter unten dargestelltes nicht anspruchsgemässes Steuergerät und/oder einen Steuerrechner ist vergleichsweise gering, so dass ein offenbarungsgemässes System insbesondere für Arbeiten oder Experimente mit einer bis z. B. typischerweise zehn 96er Wellplatten für einen Versuchsdurchgang oder eine Versuchsanordnung geeignet ist. In diesem Bereich ist die Nutzung eines vollautomatischen Dispensiergeräts häufig unangemessen aufwendig (sowohl vom Kostenaufwand her als auch bezüglich der damit verbundenen Programmier- und Rüstzeit).

Je nach Ausgestaltung kann dabei die Gefahr von unterlassenen oder fehlerhaften Dispensiervorgängen praktisch ausgeschlossen werden, so dass die Betriebssicherheit der einer vollautomatischen Durchführung entspricht. Zugleich kann, ebenso wie bei einer vollautomatischen Lösung, eine automatische Protokollierung realisiert werden.

Die vorliegende Offenbarung betrifft ferner ein nicht anspruchsgemässes, beispielhaftes Dispensersystem, umfassend mindestens einen offenbarungsgemässen Dispenser, sowie ein Steuergerät, wobei das Steuergerät zur operativen Kopplung, insbesondere leitungsgebundenen Kopplung, mit dem mindestens einen Dispenser ausgelegt ist. Das nicht anspruchsgemässe, beispielhafte Steuergerät umfasst mindestens eine Ventilsteuerung, wobei die mindestens eine Ventilsteuerung dazu ausgelegt ist, das Dispenserventil zur Abgabe eines mittels des Steuergerätes vorgegebenen Dispensiervolumens zu betätigen. Das Steuergerät kann dabei entweder autonom arbeiten oder gegebenenfalls mit einem Steuerrechner mit entsprechender Software gekoppelt sein.

Durch die entsprechende Wahl der Öffnungsdauer des Dispenserventils kann bei gegebenem Reservoirdruck und gegebener Viskosität der Flüssigkeit das in einem Dispensiervorgang in weiten Grenzen eingestellt werden.

Alternativ ist es möglich, das Dispenserventil zur Abgabe grösserer Volumina in einer Sequenz mehrfach hintereinander anzusteuern, wobei bei jeder Ansteuerung z. B. das minimal mögliche Dispensiervolumen abgeben wird. Die Ansteuerung erfolgt dabei bevorzugt mit einer genügend hohen Frequenz, um eine quasi-kontinuierliche Abgabe des Gesamtvolumens zu erreichen. Die Ansteuerfrequenz kann für geeignete Ventilkonstruktionen beispielsweise bei bis zu 4 Kilohertz (kHz) liegen.

In einer exemplarischen, nicht anspruchsgemässen Ausführungsform ist das Steuergerät für den Anschluss mehrere Dispenser eingerichtet ist und das Steuergerät umfasst eine Identifikationsvorrichtung zur Identifikation eines angeschlossenen Dispensers.

In einem exemplarischen, nicht anspruchsgemässen Ausführungsbeispiel umfasst das Dispensersystem ferner eine offenbarungsgemässe Führungseinrichtung, wobei das Dispensersystem einen Steuerrechner. Das Steuergerät und der Steuerrechner umfassen dabei ein Auswertsystem für vom Positionsmesssystem übermittelte Daten, wobei das Steuergerät und der Steuerrechner dazu ausgelegt sind, die Ist- Position des Dispensers und insbesondere einer Ventilspitze des Dispensers mit einer oder mehreren Zielpositionen zu vergleichen und eine Betätigung des Dispenserventils durch Bestromung der Ventilspule nur dann vorzunehmen, wenn die Ist-Position eine Zielposition ist.

Zielpositionen können insbesondere durch die Öffnung eines oder mehrere Wells einer Wellplatte oder Mikrotitrierplatte gegeben sein. Die Zielposition ist in der Regel kein isolierter Punkt im geometrischen Sinne, sondern umfasst ein Gebiet, in dem sich die Ventilspitze zur Dispensierung befinden kann.

Eine Zielposition liegt allerdings nur dann vor, wenn an den betreffenden Ort, z. B. in ein bestimmtes Well, tatsächlich ein Dispensieren erfolgen soll.

Weitere exemplarische und vorteilhafte Ausgestaltungen eines offenbarungsgemässen Dispensersystems ergeben sich aus den Ausführungsbeispielen, wobei die hier und in den Ausführungsbeispielen offenbarten besonderen Merkmale jeweils einzeln oder in einer Kombination realisiert sein können.

In einem weiteren Aspekt betrifft die vorliegende Offenbarung ein Verfahren zum Dispensieren flüssiger Substanzen, insbesondere mit Volumina im Nanoliterbereich oder Mikroliterbereich, mittels eines Dispensers an mindestens eine Zielposition. Das Verfahren kann umfassen:
a) manuelles Positionieren des Dispensers;
b) Auslösen eines Dispensierkommandos;
c) Bestimmen einer Ist-Position des Dispensers und insbesondere einer Ventilspitze des Dispensers;
d) Vergleichen der Ist-Position mit der mindestens einen Zielposition;
e) Auslösen einer Dispensierung in Reaktion auf das Dosierkommando nur dann, wenn die Ist-Position der Ventilspitze eine Zielposition ist.

In einer exemplarischen Ausführungsform umfasst das Verfahren ein Anzeigen, insbesondere ein grafisches Anzeigen, der mindestens einen Zielposition und/oder der Ist-Position.

In einer weiteren exemplarischen Ausführungsform umfasst das Verfahren das Abrufen eines an der mindestens einen Zielposition zu dispensierenden Volumens und Betätigung des Dispensers zur Dispensierung dieses Volumens.

Weitere exemplarische und vorteilhafte Ausgestaltungen eines offenbarungsgemässen Verfahrens ergeben sich aus den Ausführungsbeispielen, wobei die hier und in den Ausführungsbeispielen offenbarten besonderen Merkmale jeweils einzeln oder in einer Kombination realisiert sein können.

Weiter können offenbarungsgemässe Verfahren insbesondere mit offenbarungsgemässen Dispensern und Dispensersystems durchgeführt werden. Offenbarungsgemässe Dispenser und Dispensersysteme können insbesondere zur Durchführung offenabrungsgemässer Verfahren verwendet werden. Daher offenbaren alle offenbarten Ausführungsformen von Dispensern und Dispensersystemen zugleich entsprechende Dispensierverfahren und umgekehrt.

### Kurze Beschreibung der Figuren

Figur 1 zeigt schematisch eine offenbarungsgemässe Dispenser-Reservoir-Kombination.
Figur 2 zeigt schematisch einen offenbarungsgemässen Dispenser.
Figur 3 zeigt schematisch ein offenbarungsgemässes Dispensersystem in Funktioneller Darstellung.
Figuren 4, 5 zeigen schematisch ein offenbarungsgemäss Führungssystem mit einer offenbarungsgemässen Dispenser-Reservoir-Kombination.
Figuren 6a, 6b zeigen eine Führungsplatte einer offenbarungsgemässen Führungssystems.
Figur 7 zeigt schematisch ein weiteres offenbarungsgemässes Dispensersystem in Funktioneller Darstellung.
Figur 8 zeigt schematisch eine weitere offenbarungsgemässe Dispenser-Reservoir-Kombination.

### Ausführungsbeispiele

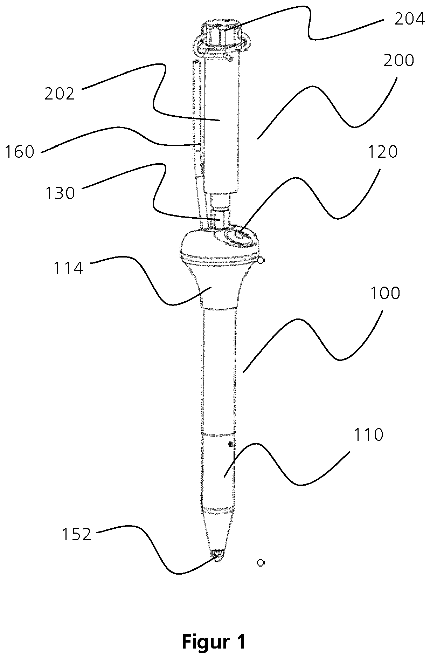

Figur1 zeigt schematisch eine Dispenser-Reservoir-Kombination mit einen Dispenser 100 zusammen mit einem angeschlossenen Reservoir 200, welches die mittels Dispenser 100 zu dispensierende Flüssigkeit bevorratet.

Der Dispenser 100 hat ein stiftartiges oder stabförmiges und im Wesentlichen zylindrisches Dispensergehäuse 110 und einen Dispenserkopf 114. Das Dispensergehäuse 110 ist dabei so ausgelegt, dass bei der Anwendung das Dispensergehäuse 110 - gegebenenfalls mittels eines weiter unten beschriebenen Kunststoffgriffs - in der Handfläche des Benutzers ruht und von Zeigefinger bis kleinem Finger umschlossen wird und sich der Dispenser 100 in axialer Richtung mittels der konkaven Form des Dispenserkopfes 114 gegen den Zeigefinger stützt. Die Haltung bei der Anwendung ist damit so, wie es beispielsweise von elektronischen Laborpipetten oder sogenannten "Pens" zur Medikamenteninjektion bekannt ist.

Das Dispensergehäuse 110 kann optional mit einem übergestreiften Kunststoffgriff, beispielsweise aus PVC (nicht dargestellt), versehen werden, der zu Reinigungs- oder Wartungszwecken leicht entfernt werden kann. Dieser Kunststoffgriff dient nicht nur der Verbesserung der Ergonomie und Haptik, sondern reduziert auch die Erwärmung des Dispensers 100 und damit eine mögliche thermische Beeinflussung von Experimenten durch die Handtemperatur. Alternativ wäre es je nach Anwendungsgebiet und Rahmenbedingungen möglich, einen entsprechenden Handgriff als festen Bestandteil des Dispensers 100 vorzusehen.

Der Kunststoffgriff oder auch der Dispenser 100 selbst können nach ergonomischen Gesichtspunkten so gestaltet werden, dass sie gut in der Hand des Benutzers liegen und auch über längere Zeit ein konzentriertes und entspanntes Arbeiten gestatten.

In den Dispenserkopf 114 ist ein Bedienelement in Form eines Tasters 120 zur Auslösung von Dispensierkommandos integriert, wobei die effektive Durchführung des Dispensiervorgangs zusätzlich eines Steuergerätes bedarf, wie weiter unten dargestellt. Die Positionierung des Tasters 120 richtet sich wesentlich nach ergonomischen Gesichtspunkten und ist bevorzugt derart, dass der Taster 120 vom Benutzer bequem mit dem Daumen bedienbar ist, wenn der Dispenser 100 in der vorgesehenen Weise gehalten wird. Es sind aber auch Ausführungen möglich, in denen der Taster 120 beispielsweise zur Bedienung mit dem Zeigefinger ausgestaltet ist. Weiterhin kann der Taster 120 auch am Dispenser 100 selbst nicht vorhanden sein. In einer solchen Ausführungsform erfolgt das Dispensierkommando beispielsweise mittels Fusstaster.

An seinem Kopfende weisst der Dispenser 100 einen Reservoir-Konnektor 130 zur Verbindung mit dem Reservoir 200 auf. Im Betrieb sitzt das Reservoir 200 auf dem Dispenserkopf 114 auf. Das Reservoir 200 hat ein Fassungsvolumen von typischerweise zwischen 2 und 20 ml. Als Reservoir 200 werden beispielsweise Einweg-Spritzenzylinder mit Luer-Lock und einem zylindrischen Reservoirkorpus 202 verwendet. Alternativ sind auch Glas-Spritzenzylinder mit Luer-Lock oder andere proprietäre Reservoirs möglich. Mittels eines Gewindeadapters, beispielsweise aus Edelstahl, sitzt das Reservoir 200 fest auf dem Dispenserkopf 114 auf.

Das Reservoir 200 wird am oberen Ende mit einem Reservoirkopf 204, beispielweise einem Metallstopfen, dichtend verschlossen. Eine Druckluft-Zuleitung (nicht dargestellt) wird mittels eines verschraubbaren Kunststoffadapters (nicht dargestellt) durch den Reservoirkopf 204 geführt, so dass die mittels Druckluftzuleitung zugeführte Druckluft die im Reservoirkorpus 202 bevorratete flüssige Substanz mit Druck beaufschlagt. Je nach Anwendung ist es auch möglich, das Reservoir 200 räumlich getrennt vom Dispenser 100 anzuordnen und zwischen Reservoir 200 und Dispenser 100 eine Flüssigkeitsleitung, z. B. in Form eines dünnen Schlauches, vorzusehen.

Beispielhaft ebenfalls im Bereich des Dispenserkopfes 214 befindet sich der Austritt einer elektrischen Steuerleitung 160 zur Energieversorgung des Dispenserventils, wie weiter unten beschrieben. Der Reservoirkopf 204 kann auch als Halterung für die Steuerleitung 160 dienen.

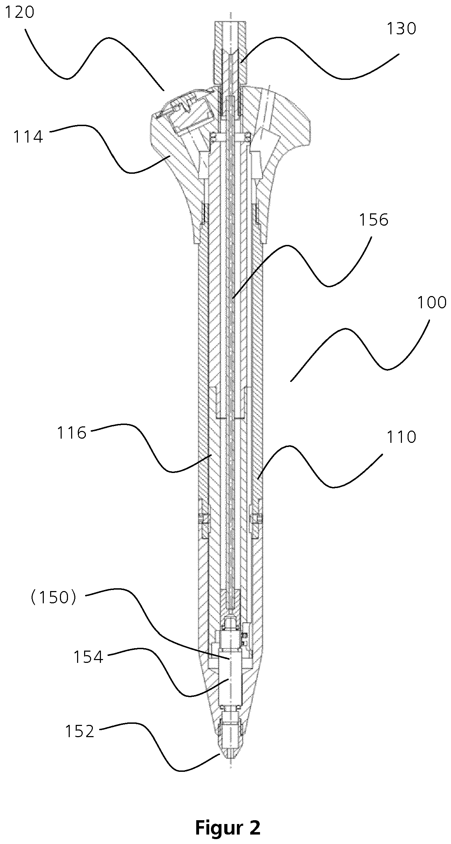

Figur 2 zeigt schematisch den inneren Aufbau des Dispensers 100 im Längsschnitt. Der Dispenser 100 umfasst ein Dispenserventil 150. Das Dispenserventil 150 ist ein passiv schliessendes Mikroventil und als Kugelventil entsprechend der obigen Offenbarung gestaltet. Der Einlass des Dispenserventils 150 ist über ein Verbindungsrohr 156 mit dem Reservoir 200 fluidisch verbunden. Das Dispenserventil 150 ist koaxial innerhalb der Ventilspule 154 angeordnet und wird in der Darstellung nach Figur 2 von dieser umschlossen.

Die Ventilspitze 152 ist mit dem Auslass des Dispenserventils 150 fluidisch gekoppelt. Sie ist konisch geformt und bildet einen Auslasskanal beispielsweise von ca. 2 - 3 mm Länge und einem Innendurchmesser von ca. 1,5 - 2 mm. Die Länge des Auslasskanals ist vorteilhaft auf einen Wert begrenzt, bei dem noch kein nennenswertes Anhaften der zu dispensierenden Flüssigkeit an die Kanalwandung erfolgt Die Ventilspitze 152 ist an der Spitze so schmal wie möglich. Durch die konische Form und eine beispielsweise möglichst spitze Ausbildung der Ventilspitze 152 wir das Zielen mit dem handgehaltenen Dispenser 100 etwa auf die vergleichsweise kleinen Wells einer üblichen Wellplatte oder Mikrotitrierplatte vereinfacht.

Optional können auch spezielle Positionierungshilfen (nicht dargestellt) vorgesehen sein. Eine derartige Positionierungshilfe kann beispielsweise durch eine Anlegekante gebildet werden, durch welche das Dispensergehäuse 110 oder die Ventilspitze 152 z. B. an die Kante eines Wells oder Reagenzglases angelegt werden kann. Ferner kann eine Positionierhilfe eine Optische Zielmarke, beispielsweise einen Lichtfleck oder ein Kreuz, projizieren, wie es z. B. von Laser-Pointern bekannt ist.

Das Dispenserventil 150 sitzt in einer rohrförmigen inneren Ventilhalterung 116 koaxial innerhalb des Dispensergehäuses 110. Die innere Ventilhalterung 116 kann eine Kabelführung, beispielsweise in Form einer an ihrem äusseren Umfang angeordneten Längsnut, aufweisen.

Zur Betätigung des Dispenserventils 150 ist Ventilspule 154 vorgesehen, welche in Reihenschaltung mit dem Taster 120 an das Steuerkabel 160 angeschlossen ist.

In einer nicht zwingenden, aber vorteilhaften Ausgestaltung ist der Reservoirkonnektor 130 mit dem Verbindungsrohr 156 verschraubt, ebenso das Verbindungsrohr 156 mit dem Dispenserventil 150. Ferner kann die Ventilspitze 152 in das Dispensergehäuse 110 eingeschraubt sein. In einer derartigen Ausführung ist der Dispenser 100 zerlegbar, so dass alle mit der zu dispensierend Flüssigkeit in Berührung kommenden Teile einschliesslich des Dispenserventils 150, gut und sicher gereinigt, und beispielsweise durch Autoklavieren desinfiziert werden können. In einer derartigen Ausführungsform weist der betriebsfähige Dispenser keine Einwegteile auf.

Vorteilhafterweise ist auch das Dispensergehäuse 110 mit nach Demontage des Ventileinsatzes weiterhin eingebauter Ventilspule 154, waschbar, z. B. durch Abspülen, und bevorzugt auch desinfizierbar. Aus diesem Grunde kann die Ventilspule 154 hermetisch vergossen sein.

Die einzelnen Bestandteile des Dispensers 100 sind vorteilhaft aus beispielsweise durch Autoklavieren desinfizierbarem Materialien, wie eloxiertem Aluminium, Edelstahl und/oder geeigneten beständigen Kunststoffen gefertigt.

Wenngleich eine Desinfektion, beispielsweise durch Autoklavieren grundsätzlich vorteilhaft erscheint, ist dies jedoch nicht zwingend und es sind auch andere Arten der Reinigung denkbar, etwa durch miniaturisierte, mit geeigneter Reinigungsflüssigkeit bzw. Desinfektionsmittel getränkte Rundbürsten.

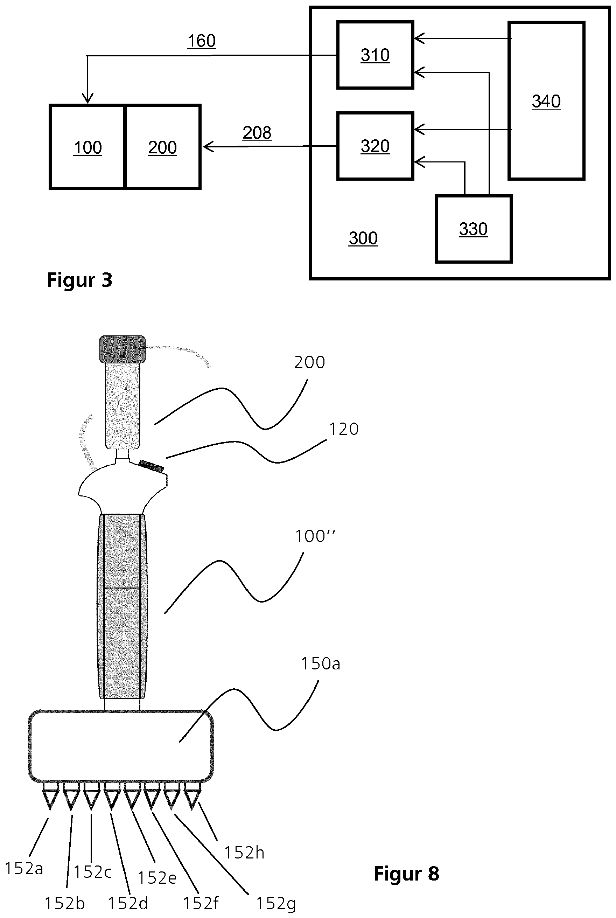

Figur 3 zeigt ein beispielhaftes Dispensersystem in einer schematischen funktionellen Darstellung. Das Dispensersystem umfasst einen Dispenser 100, ein Reservoir 200 sowie ein Steuergerät 300. Der Dispenser 100 kann beispielsweise ein Dispenser entsprechend der Darstellung in Figur 1, 2 und der zugehörige Beschreibung sein, aber auch ein anderer Dispenser entsprechend der vorliegenden Offenbarung.

Das Steuergerät 300 umfasst exemplarisch eine Ventilsteuerung 310, eine Druckluftversorgung 320, eine Energieversorgung 330 sowie eine Steuer- und Bedieneinheit 340. Die Ventilsteuerung 310 ist für den Betrieb mit dem Dispenser 100 über die Steuerleitung 160 und das Reservoir 200 mit der Druckluftversorgung 320 über eine Druckluftzuleitung 208 verbunden.

In der Darstellung nach Figur 3 kann das das Steuergerät 300 als kompaktes Tischgerät mit einem gemeinsamen Gehäuse realisiert sein. Alternativ ist es jedoch auch möglich, die Baugruppen, insbesondere Ventilsteuerung 310 und Druckluftversorgung 320, als separate Geräte bereitzustellen.

Die Energieversorgung 330 ist beispielhaft als Netzgerät für den Anschluss an das Wechselspannugnsnetz realisiert, kann aber alternativ oder zusätzlich auch auf aufladbaren oder nicht aufladbaren Batterien basieren.

Die Ventilsteuerung 310 umfasst eine Treiberstufe zur Energieversorgung der Ventilspule 154 sowie einen die Treiberstufe ansteuernden Zeitgeber oder Timer, mit dem das zu dispensierende Volumen vorgegeben wird. Alternativ kann die Ventilsteuerung einen Impulsgeber oder Impulsformer zur mehrfachen Ansteuerung des Dispenserventils in einer Sequenz enthalten, wie oben beschrieben. Die Einstellung des jeweils abzugebenden Volumens kann analog oder digital über Steuer- und Bedieneinheit erfolgen.

Die Druckluftversorgung 320 kann als mechanischer Druckregler grundsätzlich bekannter Bauweise realisiert sein, welcher beispielsweise durch eine vorhandene Labor-Druckluftversorgung oder eine in das Steuergerät 300 integrierte oder externe Luftpumpe bzw. einen Kompressor versorgt wird. Der Arbeitsdruck an der Ausgangsseite des Druckreglers ist beispielsweise manuell unabhängig vom Vordruck, d. h. dem durch Luftpumpe oder Laborversorgung bereitgestellten Luftdruck am Eingang des Druckreglers (bis typischerweise 5 bar), im Bereich von z. B. 0.1 bar bis 1 bar einstellbar. Der Arbeitsdruck wird mit einer Auflösung von z. B. 0.01 bar analog bzw. digital angezeigt und vorteilhaft protokolliert.

Eine Einstellbarkeit des Arbeitsdrucks ist nicht zwingend, aber insofern vorteilhaft, als das je Ansteuerung abgegebene Flüssigkeitsvolumen (Schussvolumen) bei gegebenem Aufbau von der Viskosität der zu dispensierenden Flüssigkeit sowie dem im Reservoir 200 wirkenden Luftdruck mitbestimmt wird.

Zur elektrischen Verbindung von Dispenser 100 und Steuergerät 300 kann die Steuerleitung 160 vorteilhafterweise mit einem entsprechenden Steckverbinder ausgestattet sein. In einer Weiterentwicklung können an das Steuergerät 300 mehrere Dispenser 100 alternativ verwendet werden, wobei das Steuergerät 300 den angeschlossenen Dispenser vorteilhafterweise mittels einer (nicht dargestellten) Identifikationsvorrichtung des Steuergerätes 300 automatisch identifiziert. Hierzu kann über den Steckverbinder zugleich den Dispenser identifizierende Informationen übertragen werden, welche beispielsweise durch eine mit Mikroschaltern im Steuergerät 300 interagierende mechanische Kodierung, eine elektrische Kodierung oder einen RFID-Tag, welcher mit einem in das Steuergerät 300 als Identifikationsvorrichtung integrierten Lesegerät interagiert.

Über eine Identifikation des Dispensers können beispielsweise die Ansteuerung der Ventilspule 154 und/oder der bereitgestellte Luftdruck in Abhängigkeit der Viskosität der zu dispensierenden Flüssigkeit automatisch angepasst werden.

In einer weiteren alternativen Ausführung ist das Steuergerät zum parallelen Anschluss mehrerer Dispenser ausgelegt.

In einer elementaren Ausführungsform dient das Steuergerät 300 lediglich der Ansteuerung und Versorgung der Dispensers 100. In weiteren Ausführungsformen kann das Steuergerät 300 weitere Funktionen bereitstellen. So ist insbesondere die Speicherung der Dispensiervorgänge zusammen mit für die Dokumentation und/oder Versuchsauswertung wesentlichen Parametern, insbesondere dem jeweils dispensierten Flüssigkeitsvolumen und /oder Datum und Uhrzeit sowie dem Arbeitsdruck zum Zwecke der Protokollführung möglich. Wenn das Steuergerät 300 zur Identifikation verschiedener Dispenser ausgelegt ist, kann der verwendete Dispenser und/oder die jeweils dispensierte Flüssigkeit ebenfalls protokolliert werden. Die Ausgabe der gespeicherten Werte kann beispielsweise über eine Anzeige der Steuer- und Bedieneinheit 340 oder einen angeschlossenen Drucker erfolgen.

Ferner kann die Steuer- und Bedieneinheit zur Verbindung mit einem Steuerrechner, beispielsweise einem externen üblichen Personal Computer (PC) ausgelegt sein und hierzu eine oder mehrere entsprechende Schnittstelle(n) aufweisen, wie z. B. nach dem üblichen USB-Standard. Alternativ oder zusätzlich zu einer Protokollierung der Dispensiervorgänge kann über einen solchen externen Rechner auch eine Fernsteuerung von Ventilsteuerung 310 und/oder Druckluftversorgung 320 erfolgen. Alternativ oder zusätzlich zu einer oder mehreren Schnittstellen nach dem USB-Standard kann das Steuergerät 300 andere Schnittstellen zur Verfügung stellen, beispielsweise nach dem RS232 und/oder dem Ethernet-Standard. Ferner können weiter Hilfseingänge und/oder Hilfsausgänge für Zusatz- oder Hilfsfunktionen vorhanden sein, beispielsweise ein oder mehrere zusätzliche Druckluftausgänge, binäre oder analoge elektrische Ausgänge, analoge elektrische Eingänge für den Anschluss zusätzlicher Sensoren, etc. Ebenfalls ist es möglich, einen Steuerrechner ganz oder teilweise in das Steuergerät 300 zu integrieren.

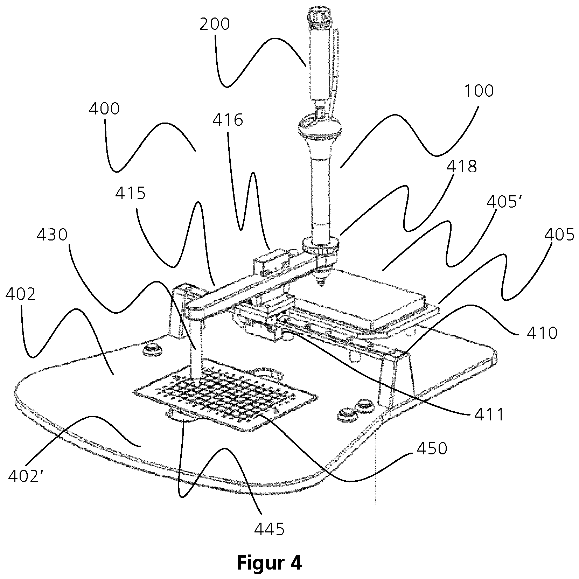

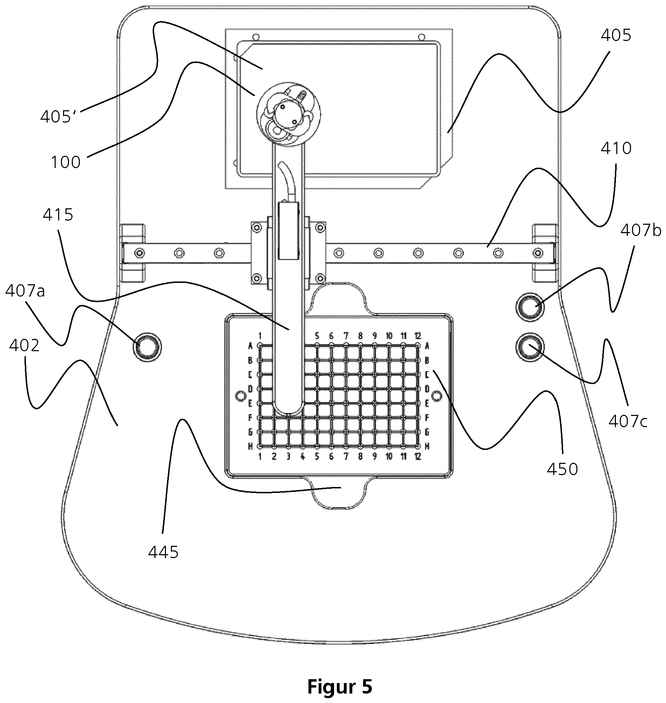

Figur 4 und Figur 5 zeigen einen Dispenser 100 mit Reservoir 200 und einer Führungseinrichtung 400. Im Zusammenhang mit der Führungseinrichtung 400 ist die Verwendung von handgehaltenem Dispenser 100 jedoch nicht zwingend. Es könnte ebenso ein Dispenser mit anderer Formgebung eingesetzt werden, der beispielsweise speziell für die Verwendung mit Führungseinrichtung 400 ausgelegt ist. In einer derartigen Konfiguration können der Dispenser und die Führungseinrichtung 400 auch ganz oder teilweise integral realisiert werden.

Die Führungseinrichtung 400 besitzt eine Grundplatte 402, welche als Montageplattform für die übrigen Komponenten dient. Die Führungsplatte trägt die übrigen Bestandteile und gewährleistet die Stabilität des Gesamtaufbaus.

Auf der Grundplatte 402 montiert sind ein Wellplattenhalter 405 und eine X-Y-Führungsmechanik mit zwei Linearachsen 410 (X-Achse) bzw. 415 (Y-Achse). Ferner umfasst die Grundplatte 402 eine Vertiefung 445 zur Aufnahme einer Führungsplatte 450.

Der Wellplattenhalter 405 dient zur Aufnahme und weitgehend spielfreien und ortsfesten Halterung einer üblichen Wellplatte oder Mikrotitrierplatte 405'. Der Wellplattenhalter 405 kann insbesondere für die Aufnahme von Wellplatten oder Mikrotitrierplatten mit 96 und/oder 384 Wells ausgelegt sein. Der Wellplattenhalter 405 kann für die Aufnahme von Well 405' im Querformat, im Hochformat, oder beides ausgelegt sein. Der Wellplattenhalter 405 stellt damit einen beispielhaften Dispensierzielhalter dar, wobei die einzelnen Wells der Wellplatte oder Mikrotitrierplatte 405' Dispensierziele sind. Grundsätzlich können Dispensierziele in Form und Grösse variabel sein.

Die X-Achse 410 und die Y-Achse 415 bilden gemeinsam eine im Wesentlichen spielfreie, handbetätigte kartesische Kinematik, welche über eine Dispenseraufnahme 418 an der Y-Achse 415 den Dispenser 100 aufnimmt, beispielsweise mittels Klemmung und/oder Einspannung, wie es etwa aus der Aufnahme für Werkzeuge und Werkstücke im bei Werkzeugmaschinen bekannt ist. Für alternative Dispenserformen kann die Dispenseraufnahme 418 entsprechend ausgestaltet werden. Die gezeigte Realisierung der Kinematik ist exemplarisch und kann ebenfalls anders gestaltet sein. So kann die Rolle von X-Achse und Y-Achse vertauscht werden. Weitere konstruktive Ausgestaltungen der Kinematik ergeben sich für den Fachmann aus bekannten Anordnungen, beispielsweise Robotern oder sonstigen Positioniersystemen mit kartesischer Kinematik.

Die Führungsmechanik hält den Dispenser 100 für den Benutzer kraftfrei in einer konstanten Höhe über der Wellplatte 405', ohne dass die Dispenserspitze in die einzelnen Wells bzw. die in ihnen enthaltene Flüssigkeit eintaucht.

Die Achsen 410, 415sind manuell mit geringem Kraftaufwand verfahrbar und erlauben dadurch eine präzise manuelle bzw. mechanische Positionierung des Dispensers 100 über den Dispensierzielen, also beispielsweise Wells der Wellplatte 405'. Die Positionierung und der Verfahrweg der Achsen 410, 415 kann so bemessen werden, dass durch Verfahren der Achsen 410, 415 der Dispenser 100 über jedem Well der Wellplatte 405' positioniert werden kann.

In die X-Achse 410 und die Y-Achse 415 sind lineare Wegmesssysteme (Längenmesssysteme) 311, 316 integriert, über welche die Position des Dispensers 100 und insbesondere seiner Ventilspitze 152 bezüglich der Wellplatte 405' erfasst wird. Durch Auslesen der Wegmesssysteme kann somit bestimmt werden, ob und ggf. über welchem Well der Wellplatte 405' sich die Ventilspitze 152 befindet.

Bei den Wegmesssystemen 111, 116 kann es sich beispielsweise um kapazitive, optische oder magnetische inkrementelle oder absolute Wegmesssysteme grundsätzlich bekannter Konstruktion handeln. Mindestens im Fall inkrementeller Wegmesssysteme sollte ferner je Achse eine Vorrichtung bekannter Konstruktion zur Erfassung mindestens einer Referenzposition, beispielweise eines Endanschlags der betreffenden Achse vorhanden sein.

Die Führungsmechanik ist exemplarisch so ausgestaltet, dass sich die y-Achse 415 von der X-Achse 410 senkrecht zur X-Achse 410 in beide Richtungen erstreckt. Beispielsweise kann in einer mittleren Stellung der Y-Achse 415 die X-Achse 410 die Y-Achse 415 etwa mittig teilen. An einem Ende der Y-Achse ist die Dispenseraufnahme 418 angeordnet, wie bereits dargestellt. Am anderen Ende der Y-Achse 415 und damit auf der anderen Seite der X-Achse 410 ragt von der Y-Achse 415 ein Führungsstift 430 senkrecht nach unten in Richtung Grundplatte. Im betriebsbereiten Zustand mit montiertem Dispenser 100 sind die Längsachsen von Führungsstift 430 und Dispenser 100 entsprechend parallel.

In dem Bereich, der beim Verfahren der Achsen 410, 415 vom Führungsstift 430 überstrichen wird, befindet sich in der Grundplatte 402 eine Vertiefung 445, welche dazu ausgelegt ist, eine Führungsplatte 450 im Wesentlichen spielfrei und bevorzugt bündig zur Oberkante der Grundplatte 402 aufzunehmen. Die Führungsplatte 450 liegt dabei beispielsweise passgenau in der Vertiefung 445 und ist mittels Fingermulden (nicht referenziert) der Vertiefung 445 entnehmbar und austauschbar. Weitere Mittel zur Positionierung, beispielsweise Passstifte und Passbohrungen, können ebenfalls vorgesehen sein.

Die Ausrichtung der Führungsplatte 450 entspricht der der Wellplatte 405'. Im Beispiel von Figur 4 sind Wellplatte 405' und Führungsplatte 450 jeweils im Querformat angeordnet. Bei einer ebenfalls möglichen Anordnung der Wellplatte 405' im Hochformat wird die Vertiefung 445 entsprechend auch für eine Aufnahme der Führungsplatte 450 im Hochformat ausgelegt.

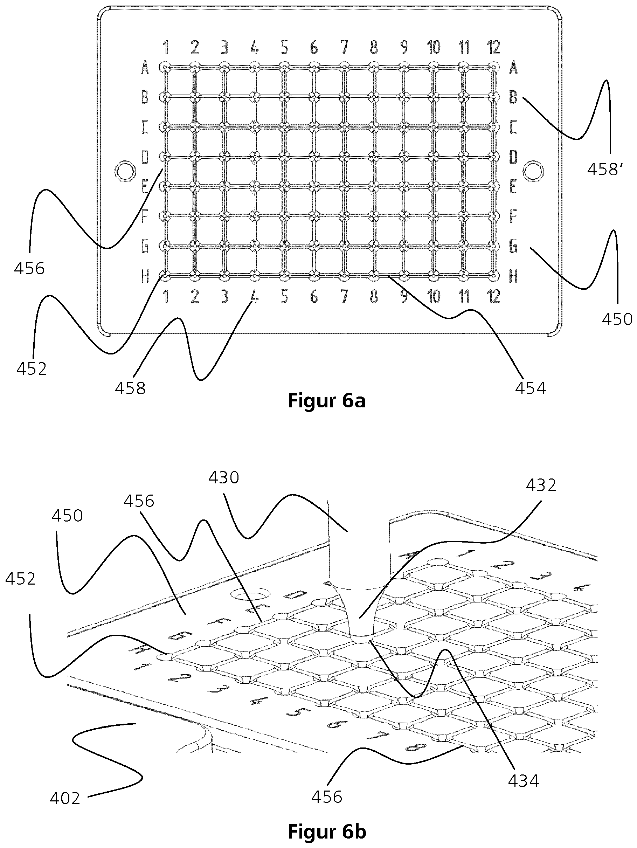

Aufbau und Funktion der Führungsplatte 450 werden durch die Figuren 6a, 6b verdeutlicht. Figur 6a zeigt die Führungsplatte 450 isoliert in Aufsicht. Figur 6b zeigt die Führungsplatte 450, eingelegt in die Vertiefung 445 von Grundplatte 402, zusammen mit dem der Führungsplatte 450 zugewandten Abschnitt des Führungsstifts 430 in perspektivischer Ansicht.

Die Führungsplatte 450 weist ein Raster von Vertiefungen oder Sacklöchern 452 als konkave Elemente auf. Für jedes Well von Wellplatte 405' ist eine Vertiefung oder Sackloch 452 vorgesehen, wobei der Mittenabstand der Wells dem Mittenabstand der Vertiefungen oder Sacklöcher 452 entspricht. In einer beispielhaften Ausführungsform ist die Führungsplatte 450 wendbar, wobei die eine Oberfläche für Wellplatten mit 96 Wells (in Figuren 6a, 6b dargestellt) und die gegenüberliegende Seite für Wellplatten mit 384 Wells ausgelegt ist. Für die Verwendung mit anderen Typen von Wellplatten können entsprechend angepasste Führungsplatten 450 verwendet werden. Die Vertiefungen oder Sacklöcher 452 sind im dargestellten Ausführungsbeispiel durch eine zeilen- und spaltenförmig angeordnete Führungsrillen 454, 456 verbunden, die der X-Richtung bzw. der Y-Richtung entsprechen. Zur Erleichterung der Orientierung und Navigation können die Zeilen und Spalten beschriftet sein, beispielsweise durch eingravierte Zahlen 458 und Buchstaben 458'.

Wie aus Figur 6b ersichtlich, ist das der Führungsplatte 450 zugewandte Ende des Führungsstifts 430 als sich verjüngender Führungszapfen 432 ausgebildet. Eine am Ende des Führungszapfens 432 befindliche Führungskugel 434 ist vorteilhaft in axialer Richtung federnd gelagert. Alternativ könnte auch der Führungszapfen 432 insgesamt oder auch der sogar der Führungsstift 430 in axialer Richtung federnd ausgelegt sein.

Der Durchmesser der Führungskugel 434 ist so bemessen, dass die Führungskugel 434 in den Führungsrillen 454, 456 im Wesentlichen spiel- und reibungsfrei gleiten und beim Überfahren einer Vertiefungen oder Sacklocher 352 mittels der gefederten Lagerung im Wesentlichen spielfrei in diese ein- und ausrasten kann. Zur Gewährleistung eines kraftarmen und ruckfreien Rasten sind die Vertiefungen oder Sacklöcher 452 mit vorteilhaft mit entsprechenden Fasen versehen.

Im Betrieb wird der Führungsstift 430 durch den Benutzer über die Führungsplatte 450 geführt, wobei die Führungskugel 434 in den Rillen 454, 456 geführt wird. Durch diese Massnahme ist die Bewegung auf geradlinige Bewegungen in X-Richtung und Y-Richtung beschränkt, wobei der Abstand benachbarter Bahnen in beiden Richtungen dem Abstand der Wells auf Wellplatte 405' entspricht. Beim Verfahren von Vertiefungen oder Sacklöchern 452 rastet die Führungskugel 434 leicht in diese ein. Aufgrund der Korrespondenz zwischen Führungsplatte 450 und Wellplatte 405' wird so eine präzise Platzierung des Dispensers 100 über den einzelnen Wells der Wellplatte 405 ermöglicht. Die Anordnung von Dispenserhalterung 418 und Führungsstift 430 an der Y-Achse 415 ist so bemessen bzw. justiert, dass die jeweilige Einrast-Position auf der Führungsplatte 450 exakt mit der korrespondierenden Position der Wellplatte 405' übereinstimmt.

In einer alternativen Ausführungsform weisst die Führungsplatte 450 statt konkaver Elemente konvexe Elemente, beispielsweise in Form von Erhebungen auf, während der Führungsstift ein korrespondierendes konkaves Element aufweist.

In einem Bereich 402' neben der Führungsplattenaufnahme 445 kann die Grundplatte 402 als Handauflagefläche ausgestaltet sein, um ein präzises und ermüdungsfreies Arbeiten auch über einen längeren Zeitraum zu ermöglichen.

Vorteilhafter Weise erfolgt das Verfahren und Positionieren des Dispensers 100 durch Verschiebung von Führungsstift 430, wodurch aufgrund der mechanischen Kopplung der Dispenser 100 entsprechend mitverschoben wird. Ein Zugriff auf den Dispenser 100 selbst durch den Bediener ist damit nicht erforderlich.

Zur Verbesserung der Ergonomie kann daher ein (nicht dargestellter) zusätzlicher, griffgerecht gestalteter Handgriff vorgesehen werden, der beispielsweise den Führungsstift 430 ganz oder teilweise umschliesst oder auch oberhalb der Y-Achse 415 auf dieser angeordnet sein kann. Dieser Handgriff kann für eine ergonomische Gestaltung ferner einen Taster enthalten, mit welchem Dispensiervorgänge alternativ zum Taster 120 des Dispensers 100 ausgelöst werden können.

Eine Führungseinrichtung mit Rastvorrichtung, welche eine sichere und vorzugsweise rastende Positionierung des Dispensers 100 über den Wells gestattet, kann anstelle der exemplarisch gezeigten Realisierung mittels Führungsstift 430 und Führungsplatte 450 auch auf andere Weise realisiert werden. So ist es beispielsweise möglich, die Führungen der X-Achse 410 und der Y-Achse 415 unmittelbar im Abstand der Wells rastend zu gestalten. Insbesondere in Verbindung mit einer entsprechenden rechnergestützten Auswertung der Wegmesssysteme 311, 316, wie weiter unten beschrieben wird, kann auf eine Rastfunktion der Führungsmechanik gegebenenfalls auch verzichtet werden.

Der Wellplattenhalter 405 kann in einer einfachen Ausführungsform starr auf der Grundplatte 402 montiert sein. Es ist jedoch auch möglich, einen Wellplattenrüttler vorzusehen, durch welchen, etwa mittels eines, Vibrationsmotors, die Wellplatte gerüttelt werden kann. Im Sinne eines modularen Aufbaus können auch ein starrer Wellplattenhalter und ein Wellplattenhalter mit Rüttler austauschbar vorgesehen werden.

Rüttler sind auf dem Gebiet der chemischen Labortechnik gut bekannt, wobei es bezüglich der Konstruktion und realisierbaren Bewegungsmuster (Rüttelmuster) eine breite Vielfalt gibt. Für die Integration in die Wellplattenhalterung kommt in erster Linie eine einfache und kostengünstige Konstruktion in Betracht, die ein Rütteln beispielsweise mit einstellbarer Frequenz im Bereich zwischen ca. 300 und 3000 Schwingungen pro Minute erzeigten kann. Die Frequenzeinstellung kann dabei manuell oder wie nachfolgend beschrieben softwaregesteuert erfolgen. Ein Ein- und Ausschalten der Rüttelfunktion kann einfach beispielsweise über einen Fusstaster oder z. B in die Grundplatte eingelassene Taster 407b, 40c erfolgen. Ein weiterer Taster 407a kann beispielsweise ebenfalls zum Auslösen von Dispensiervorgängen vorgesehen werden.

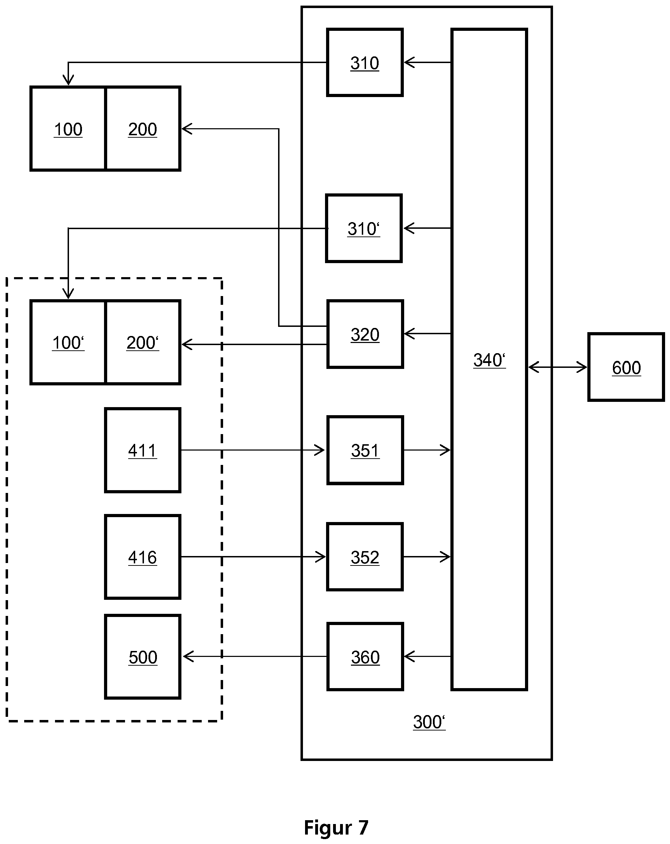

Figur 7 zeigt ein beispielhaftes weiteres Ausführungsbeispiel für ein Dispensersystem entsprechend der vorliegenden Offenbarung. Das dargestellte Dispensersystem umfasst zwei Dispenser 100, 100' mit zugehörigen Reservoirs 200, 200'. Es wird im folgenden davon ausgegangen, dass der Dispenser 100 ein handgehaltener Dispenser ist, wie er z. B. in Figuren 1, 2, dargestellt ist, und ohne weiteres Zubehör verwendet wird. Für Dispenser 100' wird beispielhaft ebenfalls von einem solchen Dispenser ausgegangen, der jedoch zusammen mit Reservoir 200' gemeinsam mit einer Führungseinrichtung 400 verwendet wird, so dass sich eine Konfiguration gemäss den Figuren 4 bis 6 ergibt. Wie bereits erwähnt, kann der Dispenser 100' jedoch auch speziell für die Verwendung mit der Führungseinrichtung 400 ausgelegt sein oder mit dieser zusammen eine integrale Einheit bilden.

Wie auch in Figur 3 erfolgt die Darstellung in Figur 7 durch wesentliche funktionelle Einheiten oder Blöcken. In der praktischen technischen Realisierung können einzelne Blöcke durch eine Vielzahl von Komponenten realisiert werden; ebenso können verschiedene funktionelle Einheiten oder Blöcke durch identische strukturelle Bauelemente oder Baugruppen realisiert werden. Grundsätzlich kann das Steuergerät 300' in ähnlicher Weise aufgebaut sein wie das Steuergerät 300 und einige oder alle der im Zusammenhang mit Steuergerät 300 aufgeführten optionalen Funktionen bereitstellen.

Selbstverständlich kann das Dispensersystem auch nur einen Dispenser 100' umfassen, oder es können mehr als zwei Dispenser, beispielsweise drei oder vier Dispenser vorhanden sein, entweder parallel an das Steuergerät 300' angeschlossen werden oder wobei optional eine automatische Unterscheidung bzw. Identifizierung der Dispenser erfolgen kann, beispielsweise über Steckverbinder wie in Zusammenhang mit Figur 3 beschrieben. Das exemplarische Dispensersystem nach Figur 7 umfasst ein Steuergerät 300' und einen Steuerrechner 600, beispielsweise einen externen labortauglichen Personal Computer (PC) mit einer entsprechenden Steuersoftware wie nachfolgend beschrieben. Es ist jedoch grundsätzlich möglich, die Funktionalität des Steuerrechners 600 auch ganz oder Teilweise in das Steuergerät 300' zu integrieren.

Da ein System nach Figur 7 die Durchführung vergleichsweise komplexer Funktionen ermöglicht, ist bevorzugt eine komfortable Anzeige und entsprechende Bedienelemente vorgesehen. Die Anzeige kann beispielsweise durch einen üblichen Flachbildschirm gebildet werden, welcher z. B. auf der Grundplatte 402 auf oder oberhalb der Führungseinrichtung z. B. mit einem Kugelgelenk befestigt werden kann. Der Bildschirm kann wahlweise ferner als Touch-Screen ausgebildet sein und damit zugleich erforderliche Bedienelemente bereitstellen.

Wie auch das in Figur 3 dargestellte Steuergerät 300 kann das Steuergerät 300' eine Energieversorgung umfassen, die aus Gründen der Übersichtlichkeit nicht dargestellt ist. Wie aus Figur 7 unmittelbar ersichtlich, dient das Steuergerät 300' als Schnittstelle bzw. Interface zwischen Dispensern 100, 100' sowie Führungseinrichtung 400 und ggf. Wellplattenrüttler einerseits und Steuerrechner 600 andererseits.

Die Druckluftversorgungen 320 dient in der in Figur 7 dargestellten Konfiguration zur Druckbeaufschlagung beider Reservoirs 200, 200' mit einem gemeinsamen Druck. Es können jedoch für die einzelnen Dispenser auch separate und beispielsweise getrennt einstellbare Druckluftversorgungen vorgesehen sein. Dies kann etwa dann sinnvoll sein, wenn mit den verschiedenen Dispensern Medien mit deutlich unterschiedlicher Viskosität abgegeben werden. Ferner können für verschiedene Druckluftausgänge jeweils separate Absperrventile sowie ein Entlüftungsventil (jeweils nicht dargestellt) vorhanden sein.

Die Dispenser 100' zugeordnete Ventilsteuerung 310' ist grundsätzlich identisch aufgebaut wie die Dispenser 100 zugeordnete Ventilsteuerung 310.

Das Steuergerät 300' umfasst ferner ein Auswertsystem 351 für das Wegmesssystem 311 der X-Achse und ein Auswertsystem 352 für das Wegmesssystem 316 der Y-Achse, wobei jeweils Wegmesssystem 311, 316 und zugehöriges Auswertsystem 351, 352 operativ gekoppelt sind, beispielsweise über entsprechende Leitungen. Die Auswertsysteme 351, 352 werten die von den Wegmesssystemen 311, 316 gesendeten Signale, beispielsweise binäre Impulsfolgen, aus und stellen entsprechende Wegsignale zur Verfügung. Alternativ können die Auswertsysteme 351, 352 auch in die Wegmesssysteme 411 oder 416 ganz oder teilweise integriert sein. Die Auswertsysteme 351, 352 sind typischerweise durch an die Wegmesssysteme 311, 316 angepasste analoge und/oder digitale Schaltungen realisiert.

Das Steuergerät 300' umfasst ferner ein optionale Ansteuerschaltung 360 für Rüttler 500, über welche der Rüttler 500 beispeisweise ein- und ausgeschaltet werden und/oder seine Frequenz durch Steuergerät 300' eingestellt werden kann.

Das Steuergerät 300' umfasst ferner eine Steuer- und Bedieneinheit 340' welche mit den übrigen funktionalen Einheiten des Steuergerätes 300' gekoppelt ist. Die Steuer- und Bedieneinheit steuert insbesondere die Ventilsteuerungen 310, 310', sowie optional die Druckluftversorgung 320 und die Ansteuerschaltung 460 für Rüttler 500. Ferner empfängt die Steuer- und Bedieneinheit 340' die Wegsignale der Auswertsysteme 351, 352 und leitet diese beispielsweise an den Steuerrechner 600 weiter.

Die Funktion der Steuer- und Bedieneinheit wird nachfolgend gemeinsam mit dem Steuerrechner 600 und der entsprechenden Software beschrieben.

Im Betrieb werden die durch die Wegmesssysteme 311, 316 erfassten Koordinaten im Wesentlichen kontinuierlich erfasst und über das Steuergerät 300' dem externen Rechner 600 zugeführt. Der externe Rechner 600 vergleicht die so übermittelte Ist-Position des Dispensers 100' mit in einem Koordinatenplan gespeicherten Koordinaten der einzelnen Wells auf Wellplatte 405'. Die einzelnen Wells stellen dabei Dosierziele und ihre Öffnungen bzw. die Mitte ihrer Öffnungen entsprechende Zielpositionen dar. Da die Wellplatten grundsätzlich genormt sind und die physische Position der Wellplatte 405' und damit der einzelnen Wells durch konstruktionsbedingt feststeht, ist die Koordinatenzuordnung für einen Wellplattentyp allgemein gültig.

In einem z. B. durch manuelle Eingabe erstellten oder aus einer Datei eingelesenen Dosierplan sind die in die Wells mittels Dispenser 100' aus Reservoir 200' zu dispensierenden Volumina hinterlegt. Dabei ist es je nach Anwendung möglich, dass die betreffende Substanz nur in einen Teil der Wells dispensiert werden soll und/oder dass in unterschiedliche Wells der gleichen Wellplatte 405' unterschiedliche Volumina zu dispensieren sind. Im Allgemeinen kann der Dosierplan demnach für jedes der z. B. 96 oder 384 Wells eine spezifische Volumenangabe enthalten. Die Abgabe des korrekten Volumens bei der Durchführung der Dispensierung erfolgt automatisch, wie zuvor dargestellt, durch entsprechende Ansteuerung der Ventilspule von Dispenser 100'.

Wie bereits dargestellt, erfolgt das Anfahren der Wells sowie bevorzugt auch das Auslösen eines Dispensierkommandos manuell durch den Benutzer. Eine Ansteuerung der Ventilspule in Dispenser 100' und damit eine tatsächliche Dispensierung aus dem Reservoir 200' erfolgt jedoch nur, wenn bei Auslösung des Dispensierkommandos, z. B. durch Betätigung des Taster 120 die Ist-Position eine Zielposition ist, sich die Ventilspitze also über einem Well befindet, in das tatsächlich eine Dispensierung gemäss Dospierplan erfolgen soll.

Befindet sich die Ventilspitze von Dispenser 100' nicht über einem Well, entspricht die Ist-Position keiner Zielposition. Daher erfolgt in Reaktion auf ein Dispensierkommando keine Bestromung der Ventilspule und damit keine Dispensierung.

Eine Zielposition liegt bevorzugt ebenfalls nicht vor, wenn sich die Ventilspitze von Dispenser 100' zwar über einem Well und damit einer grundsätzlich möglichen Zielposition befindet, in dieses Well jedoch bereits zuvor eine Dispensierung der betreffenden Substanz erfolgt ist.

Vorteilhaft stellt der Steuerrechner 600 auf einer Anzeige, beispielsweise einem Bildschirm, eine Aufsicht der Wellplatte 405' zumindest schematisch da, wobei jedes Well beispielsweise durch einen Kreis repräsentiert wird. Auf einer solchen Darstellung kann, beispielsweise durch farbliche Hervorhebung eines Wells, angezeigt werden, über welchem Well sich der Dispenser aktuell befindet. In vergleichbarer Weise kann eine Darstellung erfolgen, in welche Wells noch eine Substanzabgabe erfolgen, d. h. welche Wells gültige Dispensierziele sind, und/oder in welche Wells bereits eine Substanzabgabe erfolgt ist.

In einer solchen Ausführung ist eine korrekte Durchführung der Dispensiervorgänge auch dann zu gewährleisten, wenn die Arbeit des Bedieners zwischenzeitlich unterbrochen wird. Ebenso ist die korrekte Durchführung nicht prinzipiell an eine bestimmte Reihenfolge der anzufahrenden Wells gebunden.

Bevorzugt erfolgt durch das Steuergerät 300' und/oder den Steuerrechner 600 ferner eine Protokollierung der Dispensiervorgänge wie zuvor dargestellt.

In zahlreichen Anwendungen ist nacheinander eine Dispensierung verschiedener Substanzen erforderlich. Hierzu kann die Software auf dem Steuerrechner 600 für die einzelnen Substanzen jeweils einen Dosierplan speichern, wobei die Dosierpläne vom Benutzer nacheinander abgearbeitet werden. Die einzelnen Substanzen können dabei nacheinander in einem Dispenser 100' durch Austausch des Reservoirs 200' bei zwischengeschalteter Reinigung oder Spülung erfolgen. Alternativ können für die einzelnen Substanzen jeweils eigene Dispenser vorhanden sein, welche nacheinander in die Dispenseraufnahme 418 eingesetzt werden. Zur Spülung ohne Entnahme des Dispensers 100' aus der Dispenseraufnahme 418 kann ich auf der Grundplatte 402 bzw. in die Grundplatte 402 eingelassen ein Spülbecken (in Figuren nicht dargestellt) befinden.

Je nach Ausgestaltung der Software kann die Erstellung eines oder mehrer Dosierpläne auch ganz oder teilweise automatisiert werden. So können beispielsweise Programmroutinen für die Erstellung von Dosierplänen für folgende Funktionen vorgesehen werden: Dispensieren eines identischen Volumens in mehrere oder alle Wells; Normalisieren; Reihen, beispielsweise lineare, quadratische oder logarithmische Reihen, bei denen sich das dispensierte Volumen zwischen den Wells nach einem entsprechenden funktionalen Zusammenhang bestimmt.

Der Steuerrechner 600 und/oder das Steuergerät 300' können ferner für die Teach-In-Programmierung ausgelegt werden. Dabei wird eine Dosiersequenz zunächst manuell und beispielsweise ohne vorgängig erstellten Dosierplan mit Dispenser 100 oder 100' ausgeführt. Diese Sequenz wird dabei gespeichert und steht für nachfolgende Untersuchungen oder Experimente als Dospierplan zur Verfügung. Ebenso kann die Übertragung des so erstellten Dosierplans auf andere Dispensiersysteme, beispielsweise Dispensierautomaten oder Dispensierroboter vorgesehen werden.

Bei einer derartigen Erstellung des Dosierplans mittels Teach-In Programmierung kann ferner auf während des Teach-In-Vorgangs eine tatsächliche Dosierung unterbleiben und die Positionen, an denen ein Dosieren erfolgen soll, lediglich angefahren und gespeichert werden.

Die in den Figuren 4 und 5 dargestellte Führungseinrichtung 400 kann ferner optional mit einem elektrischen Antrieb (nicht dargestellt) ausgestattet sein, über welchen sich, beispielsweise mittels zweier Motoren, die Linearachsen 410, 415 motorisiert verfahren lassen. Der Steuerrechner 600 und/oder das Steuergerät 300' sind dann vorteilhaft mit Schnittstellen zur Ansteuerung des elektrischen Antriebs ausgestattet. In einer derartigen Ausführungsform kann eine in der zuvor beschriebenen Weise mittels Teach-In-Programmierung erstellter Dosierplan anschliessend wiederholt und automatisiert ausgeführt werden, wobei das Verfahren des Dispensers 100' bei der automatisierten Ausführung mittels des elektrischen Antriebs erfolgt.

Ferner kann durch die Software auf dem Steuerrechner 600 bei der Bestimmung von Dosiertabellen mit unterschiedlichen zu dispensierenden Volumina je Well optional eine Randomisierung vorgesehen werden. Ferner kann die Software Hilfsfunktionen bereitstellen. Diese können etwa umfassen: Spülfunktion des Dispensers 100' für die aufeinanderfolgende Dispensierung unterschiedlicher Substanzen; Kalibrierfunktion zur Kalibrierung der Abgabemenge für eine bestimmte zu dispensierende Substanz.

Die Feststellung der Dispenserposition über Wegmesssysteme 311, 316 ermöglicht in Zusammenhang mit Steuereinheit 300'und einer entsprechend angepassten Software auf dem Steuerrechner 600 ferner alternative Ausführungen der Führungseinrichtung 400. Insbesondere ist es grundsätzlich möglich, auf den Führungsstift 430 und die Führungsplatte 450 zu verzichten, wodurch der Aufbau kompakter wird, jedoch die mit den Wells korrespondierenden Rastpositionen entfallen. Die Ist-Position des Dispensers 100' kann dabei gemeinsam mit der Bildschirmabbildung der Wellplatte erfolgen, beispielsweise durch ein Kreuz oder ähnliches. Sofern sich der Dispenser 100' an einer Zielposition befindet, kann das entsprechende Well wie bereits beschrieben markiert bzw. hervorgehoben werden. Bevorzugt ist in einer derartigen Ausführungsform für die einzelnen Zielpositionen jeweils um den Mittelpunkt der Wells eine bestimmte Toleranzfläche definiert, innerhalb der sich die Ventilspitze zur Substanzabgabe befinden darf. In einer Weiterentwicklung können die Achsen 410, 415 jeweils mit einer elektrisch betätigten, beispielsweise elektromagnetischen Bremse versehen sein, welche durch den externen Rechner 600 und das Steuergerät 300' angesteuert wird, wobei die Bewegung der Achsen 410, 415 bei gelöster Bremse kontinuierlich und leichtgängig erfolgt und bei aktivierter Bremse gegen deutlichen Widerstand, oder blockiert ist. Die Ansteuerung erfolgt dabei so, dass die Bremsen zur Positionierung des Dispensers 100' gelöst sind und automatisch aktiviert werden, wenn die Ist-Position des Dispensers 100' einer Zielposition entspricht. Ein Lösen der Bremsen kann automatisch nach Durchführung der entsprechenden Dispensierung oder auch manuell erfolgen.

Ein optional vorhandener Wellplattenrüttler 500 kann beispielsweise kontinuierlich arbeiten oder manuell durch den Benutzer geschaltet werden, wie zuvor beschrieben. Er kann jedoch auch durch den Steuerrechner 600 mittels Software angesteuert werden und beispielsweise die Aktivierung des Wellplattenrüttlers 500 mit der Durchführung der Dispensiervorgänge automatisch synchronisiert werden. So kann der Wellplattenrüttler 500 beispielsweise aktiviert oder angeschaltet werden, wenn die Ist-Position des Dispensers 100' einer Zielposition entspricht und nach erfolgter Dispensierung beispielsweise zeitgesteuert wieder deaktiviert oder abgeschaltet werden.

Figur 8 zeigt rein schematisch eine weitere Ausführungsform eines Dispensers, welcher handgehalten oder ebenfalls zusammen mit einer Führungsmechanik verwendet werden kann. Der Dispenser 100" nach Figur 8 ist grundsätzlich ähnlich aufgebaut wie der Dispenser 100 nach Figur 1, 2. Anstatt eines einzelnen Ventileinsatzes 150 ist beim Dispenser nach Figur 8 jedoch ein Mehrfach Ventilhalter 150 vorgesehen, welcher in seinem Inneren (in Figur 8 nicht sichtbar) eine Ventilbank mit einer Anzahl von z. B. Mikroventilen der im Zusammenhang Dispenser 100 dargestellten Art enthält. Entsprechend der Anzahl der Ventile sind am Mehrfach-Ventilhalter 150 a je Ventil eine Ventilspitze 1 52a ... 1 52h vorgesehen, aus welchem jeweils die Dosierung erfolgt. Die Ventile werden gemeinsam aus Reservoir 200 gespeist.

Mit einer Anordnung nach Figur 8 kann eine identische Substanz parallel in einem Vorgang in mehrere Wells dispensiert werden. Zur parallelen Dosierung identischer Volumina können die einzelnen Ventile parallel angesteuert werden. Es ist jedoch auch möglich, die einzelnen Ventile individuell anzusteuern und so unterschiedliche Volumina gleichzeitig zu dosieren.

## Patentansprüche

1. Führungsseinrichtung (400) für einen Dispenser, die Führungseinrichtung (400) umfassend:
a) eine handbetätigte Kinematik (410, 41 5) mit einer Dispenseraufnahme (418), wobei die handbetätigten Kinematik eine handbetätigte kartesische X-Y-Kinematik mit einer X-Achse (110) und einer Y-Achse (115) umfasst und ein Positionssensorsystem (411, 416) je ein lineares Wegmesssystem für die X-Achse (410) und die Y-Achse (416) umfasst. ;
b) einen Dispensierzielhalter (405) zur bezüglich der Kinematik (410, 415) ortsfesten und spielfreien Lagerung mehrerer nebeneinander angeordneter Dispensierziele (405');
wobei die Kinematik (410, 415) dazu ausgelegt ist, den Dispenser und insbesondere eine Ventilspitze (152) des Dispensers (100, 100', 100") in einem Abstand über dem Dispensierzielhalter (405') zu halten;
c) das Positionssensorsystem (411, 416) zur elektronischen Erfassung einer Ist-Position des Dispensers (100, 100', 100") und insbesondere einer Ventilspitze (152) des Dispensers in einer Ebene oberhalb des Dispensierzielhalters (405).

2. Führungseinrichtung (400) nach Anspruch 1, wobei die Dispensierzielaufnahme (405) als Wellplattenhalter oder Mikrotitrierplatte mit einer Anzahl von Wells ausgebildet ist, wobei die Wells Dispensierziele bilden.

3. Führungseinrichtung (400) nach einem der Ansprüche 1 bis 2, umfassend eine Rastvorrichtung (430), 450), welche einrastet, wenn sich der Dispenser, und insbesondere eine Ventilspitze des Dispensers, über einem Dispensierziel befindet.

4. Führungseinrichtung (400) nach Anspruch 3, wobei die Rastvorrichtung (430, 450) einen Führungsstift (430) und eine Führungsplatte (450) aufweist, wobei die Führungsplatte (450) eine Anzahl von konkaven Elementen (452) aufweist, deren geometrische Anordnung auf der Führungsplatte (45) der geometrischen Anordnung der Dispensierziele entspricht, und wobei der Führungsstift (430) dazu ausgelegt ist, bei Positionierung über einem konkaven Element (452) in dieses einzurasten und im eingerasteten Zustand eine Bewegung der Kinematik (410, 41 5) lösbar zu blockieren oder zu erschweren.

5. Führungseinrichtung (400) nach einem der Ansprüche 1 bis 4, wobei die Führungseinrichtung (400) einen mit der handbetätigten Kinematik (410, 415) operativ gekoppelten elektrischen Antrieb zum Bewegen bzw. Verfahren der Dispenseraufnahme umfasst.

6. Verfahren zum Dispensieren flüssiger Substanzen, insbesondere mit Volumina im Nanoliterbereich oder Mikroliterbereich, mittels eines Dispensers(100, 100', 100") und einer Führungseinrichtung gemäss einem der vorangegangenen Ansprüche 1 bis 5 an mindestens eine Zielposition, das Verfahren umfassend:
a) manuelles Positionieren des Dispensers (100, 100' 100") mit der handbetätigten Kinematik (410, 415) mit einer Dispenseraufnahme (418), wobei die handbetätigten Kinematik eine handbetätigte kartesische X-Y-Kinematik mit einer X-Achse (110) und einer Y-Achse (115) umfasst und das Positionssensorsystem (411, 416) je ein lineares Wegmesssystem für die X-Achse (410) und die Y-Achse (416) umfasst. ;
b) Auslösen eines Dispensierkommandos;
c) Bestimmen einer Ist-Position des Dispensers (100, 100', 100") und insbesondere einer Ventilspitze (152) des Dispensers (100, 100', 100");
d) Vergleichen der Ist-Position mit der mindestens einen Zielposition;
e) Auslösen einer Dispensierung in Reaktion auf das Dosierkommando nur dann, wenn die Ist-Position der Ventilspitze eine Zielposition ist.

7. Verfahren nach Anspruch 6, umfassend ein Anzeigen, insbesondere ein grafisches Anzeigen, der mindestens einen Zielposition und/oder der Ist-Position.

8. Verfahren nach einem der Ansprüche 6 oder 7, umfassend das Abrufen eines an der mindestens einen Zielposition zu dispensierenden Volumen und Betätigung des Dispensers (100, 100', 100") zur Dispensierung dieses Volumens.

9. Dispensersystem umfassend einen Dispenser (100, 100', 100") zum Dispensieren von Fluiden, vorzugsweise flüssiger Substanzen, insbesondere mit Volumina im Nanoliterbereich oder Mikroliterbereich, umfassend:
a) ein im Wesentlichen stabförmiges Gehäuse (110), das dazu ausgebildet ist, zur Anwendung von einem Benutzer in einer Hand gehalten zu werden;
b) einen Reservoirkonnektor (130) zum fluidischen Anschluss eines das zu dispensierende Fluid enthaltenden Reservoirs (200),
c) ein Auslöselement (120) zur manuellen Auslösung eines Dispensierkommandos;
d) ein elektrisch betätigtes Dispenserventil (150) mit einem geöffneten und einem geschlossenen Zustand, wobei das Dispenserventil (150) einen mit dem Reservoirkonnektor (130) fluidisch gekoppelten Einlass sowie einen Auslass besitzt, wobei das Dispenserventil (150) dazu ausgelegt ist, im geöffneten Zustand zu dispensierende Flüssigkeit vom der Einlass zum Auslass zu leiten;
e) eine mit dem Auslass des Dispenserventils (150) fluidisch gekoppelte oder Teil des Dispenserventils (150) bildende Ventilspitze (152), die dazu ausgelegt ist, im geöffneten Zustand des Dispenserventils (150) Flüssigkeit aus dem Dispenser (100, 100', 100") zu dispensieren und wobei die in der Anwendung mit der zu dispensierenden Substanz in Kontakt kommenden Elemente, insbesondere das Dispenserventil (150), zerstörungsfrei entnehmbar und wieder montierbar sind.
und eine Führungseinrichtung gemäss einem der vorangegangenen Ansprüche 1 bis 5.

10. Dispensersystem nach Anspruch 9, wobei das Dispenserventil (150) des Dispensers (100, 100', 100") als passiv schliessendes Kugelventil mit einem aus mineralischem Material gefertigten Ventilsitz und aus mineralischem Material gefertigter Ventilkugel ausgelegt ist.

11. Dispensersystem nach einem der vorangegangenen Ansprüche, wobei das Dispenserventil (150) für ein minimales Dispensiervolumen im Bereich von 10 Nanoliter bis 200 Nanoliter ausgelegt ist.

12. Dispensersystem nach einem der vorangegangenen Ansprüche, wobei der Dispenser eine Anzahl von Dispenserventilen und eine entsprechende Anzahl von Ventilspitzen (152a, 152b, 152c, 152d, 152e, 152f, 152g, 152h) umfasst.

13. Dispenser-Reservoir-Kombination, umfassend einen Dispenser (100, 100', 100") gemäss dem Dispensersystem nach einem der Ansprüche 9 bis 12, sowie ein zur Aufnahme der zu dispensierenden Substanz ausgelegtes Reservoir (200), wobei das Reservoir (200) einen Anschluss zur Beaufschlagung der aufgenommenen Substanz mit Druckluft umfasst.

## Claims

1. Guide device (400) for a dispenser, the guide device (400) comprising:
a) a manually actuated kinematic mechanism (410, 415) with a dispenser receptacle (418), wherein the manually actuated kinematic mechanism comprises a manually actuated Cartesian X-Y kinematic system with an X axis (110) and a Y axis (115), and a position sensor system (411, 416) comprises a linear path measurement system for the X axis (410) and one for the Y axis (416);
b) a dispensing target holder (405), by which a plurality of dispensing targets (405') arranged next to one another are mounted in a fixed position and free of play with respect to the kinematic mechanism (410, 415);
wherein the kinematic mechanism (410, 415) is designed to hold the dispenser, and in particular a valve tip (152) of the dispenser (100, 100', 100"), at a distance above the dispensing target holder (405');
c) the position sensor system (411, 416) for electronic detection of an actual position of the dispenser (100, 100', 100") and in particular of a valve tip (152) of the dispenser in a plane above the dispensing target holder (405).

2. Guide device (400) according to one of Claims 1, wherein the dispensing target receptacle (405) is designed as a well plate holder or microtitre plate with a number of wells, wherein the wells form dispensing targets.

3. Guide device (400) according to one of Claims 1 to 2, comprising a latching device (430, 450) which latches when the dispenser, and in particular a valve tip of the dispenser, is located above a dispensing target.

4. Guide device (400) according to Claim 3, wherein the latching device (430, 450) has a guide pin (430) and a guide plate (450), wherein the guide plate (450) has a number of concave elements (452), of which the geometric arrangement on the guide plate (45) corresponds to the geometric arrangement of the dispensing targets, and wherein the the guide pin (430) is designed, when positioned over a concave element (452), to latch into the latter and, in the latched state, to releasably block or impede a movement of the kinematic mechanism (410, 415).

5. Guide device (400) according to one of Claims 1 to 4, wherein the guide device (400) comprises an electric drive, operatively coupled to the manually actuated kinematic mechanism (410, 415), for moving or displacing the dispenser receptacle.

6. Method for dispensing liquid substances, in particular with volumes in the nanolitre range or microlitre range, by means of a dispenser (100, 100', 100") and a guide device according to one of Claims 1 to 5, to at least one target position, the method comprising:
a) manually positioning the dispenser (100, 100', 100") with the manually actuated kinematic mechanism (410, 415) with a dispenser receptacle (418), wherein the manually actuated kinematic mechanism comprises a manually actuated Cartesian X-Y kinematic system with an X axis (110) and a Y axis (115), and the position sensor system (411, 416) comprises a linear path measurement system for the X axis (410) and one for the Y axis (416);
b) triggering a dispensing command;
c) determining an actual position of the dispenser (100, 100', 100") and in particular of a valve tip (152) of the dispenser (100, 100', 100");
d) comparing the actual position to the at least one target position;
e) triggering a dispensing in reaction to the dosing command only when the actual position of the valve tip is a target position.

7. Method according to Claim 6, comprising a display, in particular a graphic display, of the at least one target position and/or the actual position.

8. Method according to either of Claims 6 and 7, in which a volume to be dispensed at the at least one target position is called up, and the dispenser (100, 100', 100") is actuated in order to dispense this volume.

9. Dispenser system comprising a dispenser (100, 100', 100") for dispensing fluids, preferably liquid substances, in particular with volumes in the nanolitre range or microlitre range, said dispenser comprising:
a) a substantially rod-shaped housing (110), which is designed to be used by being held in a hand by a user;
b) a reservoir connector (130) for the fluidic attachment of a reservoir (200) containing the fluid that is to be dispensed;
c) a trigger element (120) for manually triggering a dispensing command;
d) an electrically actuated dispenser valve (150) having an opened and a closed state, wherein the dispenser valve (150) has an inlet, fluidically coupled to the reservoir connector (130), and also an outlet, wherein the dispenser valve (150) is designed, in the opened state, to guide liquid that is to be dispensed from the inlet to the outlet;
e) a valve tip (152) fluidically coupled to the outlet of the dispenser valve (150) or forming part of the dispenser valve (150), which valve tip (152) is designed, when the dispenser valve (150) is in the opened state, to dispense liquid from the dispenser (100, 100', 100"), and wherein the elements coming into contact, during use, with the substance that is to be dispensed, in particular the dispenser valve (150), are removable and reattachable without destruction,
and a guide device according to one of Claims 1 to 5.

10. Dispenser system according to Claim 9, wherein the dispenser valve (150) of the dispenser (100, 100', 100") is designed as a passively closing ball valve with a valve seat made from mineral material and a valve ball made from mineral material.

11. Dispenser system according to one of the preceding claims, wherein the dispenser valve (150) is designed for a minimum dispensing volume in the range of 10 nanolitres to 200 nanolitres.

12. Dispenser system according to one of the preceding claims, wherein the dispenser comprises a number of dispenser valves and a corresponding number of valve tips (152a, 152b, 152c, 152d, 152e, 152f, 152g, 152h).

13. Dispenser/reservoir combination, comprising a dispenser (100, 100', 100") as per the dispenser system according to one of Claims 9 to 12, and also a reservoir (200) designed to receive the substance to be dispensed, wherein the reservoir (200) comprises an attachment for applying compressed air to the substance received.

## Revendications

1. Dispositif de guidage (400) pour un distributeur, le dispositif de guidage (400) comportant :
a) un mécanisme cinématique (410, 415) actionné manuellement comprenant un logement de distributeur (418), le mécanisme cinématique actionné manuellement comportant un mécanisme cinématique X-Y cartésien actionné manuellement présentant un axe X (110) et un axe Y (115), et un système de détection de position (411, 416) comportant respectivement un système de mesure de course linéaire pour l'axe X (410) et l'axe Y (416) ;
b) un support de cible de distributeur (405) pour le montage fixe et sans jeu par rapport au mécanisme cinématique (410, 415) de plusieurs cibles de distributeur juxtaposées (405') ;
le mécanisme cinématique (410, 415) étant conçu pour maintenir le distributeur et en particulier une pointe de soupape (152) du distributeur (100, 100', 100") à une certaine distance au-dessus du support de cible de distributeur (405') ;
c) le système de détection de position (411, 416) pour la détection électronique d'une position réelle du distributeur (100, 100', 100") et en particulier d'une pointe de soupape (152) du distributeur dans un plan au-dessus du support de cible de distributeur (405).

2. Dispositif de guidage (400) selon l'une des revendications 1, dans lequel le logement de cible de distributeur (405) est réalisé sous forme de support de plaque multipuits ou de plaque de microtitrage comprenant un certain nombre de puits, les puits formant des cibles de distributeur.

3. Dispositif de guidage (400) selon la revendication 1 ou 2, comportant un dispositif d'encliquetage (430, 450), lequel s'encliquète lorsque le distributeur, et en particulier une pointe de soupape du distributeur, se trouvent au-dessus d'une cible de distributeur.

4. Dispositif de guidage (400) selon la revendication 3, dans lequel le dispositif d'encliquetage (430, 450) comprend une goupille de guidage (430) et une plaque de guidage (450), dans lequel la plaque de guidage (450) comprend un certain nombre d'éléments concaves (452) dont l'agencement géométrique sur la plaque de guidage (45) correspond à l'agencement géométrique des cibles de distributeur, et dans lequel la la goupille de guidage (430) est conçue pour, lors du positionnement au-dessus d'un élément concave (452), s'encliqueter dans celui-ci et pour bloquer de manière libérable ou entraver un déplacement du mécanisme cinématique (410, 415) à l'état encliqueté.

5. Dispositif de guidage (400) selon l'une des revendications 1 à 4, le dispositif de guidage (400) comportant un entraînement électrique accouplé fonctionnellement au mécanisme cinématique (410, 415) actionné manuellement pour déplacer ou mouvoir le logement de distributeur.

6. Procédé de distribution de substances liquides, en particulier présentant des volumes de l'ordre du nanolitre ou du microlitre, au moyen d'un distributeur (100, 100', 100") et d'un dispositif de guidage selon l'une des revendications précédentes 1 à 5 en au moins une position cible, le procédé comportant :
a) le positionnement manuel du distributeur (100, 100' 100") à l'aide du mécanisme cinématique (410, 415) actionné manuellement comprenant un logement de distributeur (418), le mécanisme cinématique actionné manuellement comportant un mécanisme cinématique X-Y cartésien actionné manuellement présentant un axe X (110) et un axe Y (115) et le système de détection de position (411, 416) comportant respectivement un système de mesure de course linéaire pour l'axe X (410) et l'axe Y (416) ;
b) le déclenchement d'une commande de distribution;
c) la détermination d'une position réelle du distributeur (100, 100', 100") et en particulier d'une pointe de soupape (152) du distributeur (100, 100', 100");
d) la comparaison de la position réelle à ladite au moins une position cible ;
e) le déclenchement d'une distribution en réponse à la commande de dosage seulement si la position réelle de la pointe de soupape est une position cible.

7. Procédé selon la revendication 6, comportant un affichage, en particulier un affichage graphique, de ladite au moins une position cible et/ou de la position réelle.

8. Procédé selon la revendication 6 ou 7, comportant la demande d'un volume à distribuer à ladite au moins une position cible et l'actionnement du distributeur (100, 100', 100") pour la distribution de ce volume.

9. Système de distribution comportant un distributeur (100, 100', 100") pour la distribution de fluides, de préférence de substances liquides, en particulier présentant des volumes de l'ordre du nanolitre ou du microlitre, comportant :
a) un boîtier (110) sensiblement en forme de barre, lequel est réalisé pour être tenu à la main pour l'utilisation par un utilisateur ;
b) un connecteur de réservoir (130) pour le raccordement fluidique d'un réservoir (200) contenant le fluide à distribuer,
c) un élément de déclenchement (120) pour le déclenchement manuel d'une commande de distribution ;
d) une soupape de distribution (150) actionnée électriquement et présentant un état ouvert et un état fermé, la soupape de distribution (150) comportant une entrée accouplée de manière fluidique au connecteur de réservoir (130) et une sortie, la soupape de distribution (150) étant conçue pour, à l'état ouvert, guider le liquide à distribuer de l'entrée à la sortie ;
e) une pointe de soupape (152) accouplée de manière fluidique à la sortie de la soupape de distribution (150) ou formant une partie de la soupape de distribution (150), laquelle pointe de soupape est conçue pour, à l'état ouvert de la soupape de distribution (150), distribuer du liquide à partir du distributeur (100, 100', 100"), et les éléments venant en contact avec la substance à distribuer lors de l'utilisation, en particulier la soupape de distribution (150), pouvant être retirés de manière non destructive et pouvant être montés à nouveau,
et un dispositif de guidage selon l'une des revendications précédentes 1 à 5.

10. Système de distribution selon la revendication 9, dans lequel la soupape de distribution (150) du distributeur (100, 100', 100") est réalisée sous forme de soupape à bille se fermant passivement comprenant un siège de soupape fabriqué à partir d'une matière minérale et une bille de soupape fabriquée à partir d'une matière minérale.

11. Système de distribution selon l'une des revendications précédentes, dans lequel la soupape de distribution (150) est conçue pour un volume de distribution minimal dans la plage de 10 nanolitres à 200 nanolitres.

12. Système de distribution selon l'une des revendications précédentes, dans lequel le distributeur comporte un certain nombre de soupapes de distribution et un nombre correspondant de pointes de soupape (152a, 152b, 152c, 152d, 152e, 152f, 152g, 152h).

13. Combinaison distributeur-réservoir comportant un distributeur (100, 100', 100") selon le système de distribution selon l'une des revendications 9 à 12, ainsi qu'un réservoir (200) conçu pour recevoir la substance à distribuer, dans laquelle le réservoir (200) comporte un raccord pour exposer la substance reçue à de l'air comprimé.
